(19) **Europäisches Patentamt**
**European Patent Office**
**Office européen des brevets**

(11) **EP 2 478 057 B1**

(12) **EUROPEAN PATENT SPECIFICATION**

(45) Date of publication and mention
of the grant of the patent:
**14.10.2020 Bulletin 2020/42**

(21) Application number: **10760127.0**

(22) Date of filing: **16.09.2010**

(51) Int Cl.:
*C08L 91/00* (2006.01)    *C08L 93/00* (2006.01)
*C08L 45/00* (2006.01)    *C08L 95/00* (2006.01)
*C08L 101/00* (2006.01)   *C08L 5/00* (2006.01)
*E01C 7/18* (2006.01)     *E01C 7/35* (2006.01)

(86) International application number:
**PCT/NL2010/050597**

(87) International publication number:
**WO 2011/034423 (24.03.2011 Gazette 2011/12)**

(54) **STORAGE STABLE, LIGHT COLOURED EMULSIONS FROM LOW PENETRATION GRADE CLEAR BINDERS**

Lagerungsstabile, hellfarbige Emulsionen aus klaren Bindern mit niedrigem Penetrationsgrad

Émulsions de couleur claire, stables au stockage à base de liants clairs à faible degré de pénétration

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **17.09.2009 EP 09170592
17.09.2009 US 243284 P**

(43) Date of publication of application:
**25.07.2012 Bulletin 2012/30**

(73) Proprietor: **Latexfalt B.V.
2396 AP Koudekerk a/d Rijn (NL)**

(72) Inventors:
• **COTIUGA, Irina Manuela
NL-3521 GZ Utrecht (NL)**
• **LOMMERTS, Bert Jan
NL-1703 RB Heerhugowaard (NL)**

• **PASSIES, Harriet
NL-3645 DR Vinkeveen (NL)**

(74) Representative: **Nederlandsch Octrooibureau
P.O. Box 29720
2502 LS The Hague (NL)**

(56) References cited:
**WO-A1-89/06259      WO-A1-2009/113854
GB-A- 1 226 234      JP-A- 6 271 790
US-A- 2 529 261      US-A- 5 246 986
US-A- 5 750 598      US-A1- 2007 105 987**

Remarks:
The file contains technical information submitted after the application was filed and not included in this specification

**Description**

**Field of the invention**

The present invention relates to light coloured emulsions from hard synthetic binders suitable for use in coloured pavement applications. The light coloured emulsions according to the present invention are storage stable and fast breaking. The light coloured emulsions according to the invention can also conveniently be used for other applications including road coating applications such as chip less surface dressings and trackless tack coating compositions, water proofing compositions, flooring applications, bonding layers, impregnation layers, dense coated materials and semi-dense coated materials which are cold-cast or storable, slurry seals, micro-surfacing compositions and mortars.

**Background of the invention**

Coloured paving have been used in public places in United States and Europe already since the 70's. Initially, the bituminous binders used were bitumen to which dyes were added in order to prepare the coloured paving. However, bitumen is difficult to dye and, as a consequence, more effort was put into preparing paving materials from colourless binders (also known as "clear" binders).

The following step was made towards the use of resins and/or thermoplastic elastomers and petroleum-based oils as binders with superior properties compared to the bitumen materials. Nevertheless, these synthetic binders tend to degrade in course of time due to their prolonged exposure times in the sunlight. Other factors of the material degradation are oil spillage, heat and rain/moisture.

To avoid these problems, hydrogenated resins and clear and bright hydrogenated oils with low content of aromatics (JP 2002 206047 of Showa Shell) or viscous oily substances and low acid and bromine number resins (WO 2009/010582 of Shell) are currently used. Low bromine number resins have less double carbon-carbon bonds in the main chains of the polymeric materials, and thus they are less prone to oxidation/degradation. Low acid number clear/transparent resins have the advantage that they remain transparent when mixed with the oily substances, which makes them easier to dye into coloured materials; they also seem to perform better in terms of drying under moist conditions.

While these synthetic binders provide a good solution for the production of high durability and high performance coloured asphalts, the storage and handling temperature of the binders are always rather high, between 120° and 180°C, which imply additional costs and which have a negative impact on the environment as well as on the quality of the product (oxidation). As an alternative, emulsion technology has obvious advantages over warm binders, e.g. energy conservation and pollution control, versatility, performance and ease of use.

There are several essential requirements a road materials should meet, e.g. elastic stiffness which enables good load spread-ability, high fatigue strength which prevents formation and propagation of cracks and high resistant to permanent deformation. Generally, hard polymer or polymer latex modified binders meet the above specified requirements.

Nevertheless, hard binders are rather difficult to emulsify as more energy is required to compensate for the higher internal cohesion and higher viscosity of such binders.

US 2007105987 to Latexfalt B.V. discloses an essential colourless binder composition comprising a naphthenic oil having a total content of naphthenics of 35 % - 80 % by weight, based on the total weight of the naphthenic oil, and a petroleum or synthetic hydrocarbon resin, wherein the ratio of the naphthenic oil and the petroleum or synthetic hydrocarbon resin is between 10 : 90 to 90 : 10. The essential colourless binder composition is suitable for use in coloured asphalt compositions and emulsions.

US 5.246.986 of Elf France discloses an emulsion of a bituminous binder wherein a thickening agent is employed that contains at least 40% by weight of scleroglucan, wherein it is preferred that the aqueous phase of the emulsion comprises 100 to 5000 ppm, preferably 200 to 2000 ppm of scleroglucan. Examples 2 and 4 disclose cationic emulsions comprising bitumen having a penetration of 180 - 220 $10^{-1}$ mm and scleroglucan of a technical grade (which consists of 70 wt.% of scleroglucan and 30 wt.% of biomass), wherein the scleroglucan (calculated on actual scleroglucan content) is 0.021 wt.%. The penetration was determined according to NF Standard T 66004 which is equivalent to ASTM D5-97 (cf. C. Garrigues and P. Vincent, "Sulfur/Asfalt binders for Road Construction", 'New uses of Sulfur", Chapter 8, pages 130 153, 1975; DOI 10.1021/ba-1975-0140.ch008, Advances in Chemistry, Vol. 140, ISBN13: 9780841202184, eISBN: 9780841223219).

GB A 2452903 of Colas S.A. discloses an emulsion comprising an aqueous phase and an organic phase comprising a binder composition, wherein the binder composition comprises bitumen and a non-aromatic polymer, in particular polyisoprene. The emulsion is preferably cationic. The bitumen has preferably a penetration of 50 to 150 $10^{-1}$ mm. The emulsion is rapidly breaking as indicated by a breaking index (according to NFT 66-017 (tentative French National Standard December 1983; equivalent to EN 13075-1) of 45 - 100. The emulsion preferably comprises 45 - 75 wt.% of the binder composition, based on the total weight of the emulsion.

WO 89/06259 discloses a binder composition comprising a mixture of one or more natural gums or rosins, two or more synthetic plastic materials and a lubricating and thickening agent. Emulsions are, however, not disclosed.

WO 2009/113854 of Latexfalt B.V. discloses emulsions comprising a $(1 \rightarrow 3)$-$\beta$-D-glucan, preferably scleroglucan, a biodegradable emulsifier which may be non-ionic or cationic, and bitumen. The bitumen have a penetration in the range of about 10 to about 350 $10^{-1}$ mm according to ASTM D5-97, more preferably about 70 to about 220 $10^{-1}$ mm.

As explained above, there is a need in the art for light coloured emulsions having excellent storage stability which are fast breaking.

**Summary of the invention**

The present invention relates to an emulsion comprising a $(1 \rightarrow 3)$-$\beta$-D-glucan, a cationic emulsifier, a recovered binder having a penetration of less than 70 $10^{-1}$ mm and more than 10 $10^{-1}$ mm according to ASTM D5-97, wherein the recovered binder comprises a light coloured oil having a colour of D8.0 according to ASTM D1500 or less and a clear binder, wherein the clear binder is selected from the group consisting of petroleum hydrocarbon resins, natural resins and synthetic hydrocarbon resins,
wherein the weight ratio of the light coloured oil and the clear binder in the recovered binder is between 20: 80 and 80:20,
wherein the $(1 \rightarrow 3)$-$\beta$-D-glucan is used in admixture with an oil,
wherein the $(1 \rightarrow 3)$-$\beta$-D-glucan is scleroglucan,
wherein the emulsion comprises 0.0005 wt.% to 0.1 wt.% of the scleroglucan and 0.01 wt.% to 20 wt.% of the cationic emulsifier, based on the total weight of the emulsion, and
wherein the cationic emulsifier is:

(a) derived from amines having the formula:

$$R\text{-}NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p is an integer in the range of 0 to 6, and n is an integer in the range of 1 - 8; or
(b) derived from amidoamines having the formula:

$$R\text{-}C(O)NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p is an integer in the range of 0 to 6, and n is an integer in the range of 1 - 8.

The present invention further relates to the use of such emulsions in road coating applications such as chip less surface dressings and trackless coating compositions, water proofing compositions, flooring applications, bonding layers, impregnation layers, dense coated materials and semi-dense coated materials which are cold-cast or storable, slurry seals, micro-surfacing compositions and mortars.

The invention also relates to a composition comprising (a) a particulate material, wherein the average diameter of the particulate material is 3 mm or less as determined according to British Standard BS 63, and (b) an emulsion according to the invention.

**Detailed description of the invention**

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The term "emulsion" is to be understood as a system in which liquid droplets and/or liquid crystals are dispersed in a liquid. In emulsions the droplets often exceed the usual limits for colloids in size. An emulsion is denoted by the symbol O/W if the continuous phase is an aqueous solution and by W/O if the continuous phase is an organic liquid (an "oil"). More complicated emulsions such as O/W/O (i.e. oil droplets contained within aqueous droplets dispersed in a continuous oil phase or three-phase emulsions) are also included by the term "emulsion". Photographic emulsions, although colloidal systems, are not emulsions in the sense of the term "emulsions" as used in this document (cf. International Union of Pure and Applied Chemistry, Manual of Symbols and Terminology for Physiochemical Quantities and Units, Appendix II, Definitions, Terminology, and Symbols in Colloid and Surface Chemistry, Part 1, web version 2001). The type of emulsion (O/W or W/O) is determined by the volume ratio of the two liquids. For example, with 5% water and 95% oil (an O/W phase ratio of 19), the emulsion is usually W/O.

In this document, a "hard" binder is to be understood as a binder having a penetration of about 10 to about 100 $10^{-1}$ mm according to ASTM D5-97. On the other hand, a "soft" binder is to be understood as a binder having a penetration of about more than about 100 to about 350 $10^{-1}$ mm according to ASTM D5-97. As is well known in the art, the unit for penetration according to ASTM D5-97 is "$10^{-1}$ mm".

The penetration values further disclosed in this document refer to the penetration of the "recovered binder". The recovered binder has a lower penetration than the same binder in its virgin state. As is well known in the art, the hardness of binders may be reduced by using a softening component such as an oil. Accordingly, in this document, the penetration values are defined for the recovered binder which comprises a clear binder and an light coloured oil. According to the invention, the weight ratio of the light coloured oil and the clear binder is between 20 : 80 to 80 : 20, based on the total weight of the recovered binder. Clear binders are well known in the art and examples of such binders are Kromatis® of Total, Colorfalt® of Ventraco and Mexphalte® C of Shell..

The colour of petroleum products is established by ASTM D1500, although other standard methods, e.g. (APHA colour by ASTM 5386) may be used for this purpose when appropriate. The maximum value under ASTM D1500 is "D8.0" which means that the colour is darker than 8 on a scale of 0.5 to 8. In the present document, "light coloured" is defined as a colour of D8.0 according to ASTM D1500 or less.

## The (1→3)-β-D-glucan

According to the invention, the (1→3)-β-D-glucan is scleroglucan (CAS No. 39464-87-4).

Suitably, the glucan is used in an admixture with an oil, preferably vegetable oil, more preferably a food grade vegetable oil, to protect glucan particles to conglomerate when they are contacted with an aqueous medium.

## The cationic emulsifier

Cationic emulsifiers are well known in the art. Quaternary amines include products such as diquatemary amines, e.g. the Redicote® products manufactured by AkzoNobel. The cationic emulsifiers

(a) are derived from amines having the formula:

$$R\text{-}NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p is an integer in the range of 0 to 6, and n is an integer in the range of 1 - 8; or

(b) are derived from amidoamines having the formula:

$$R\text{-}C(O)NH\text{-}(C_mH_{2m}\text{-}NH)_p\text{-}(C_nH_{2n})\text{-}NH_2$$

wherein R is a $C_1$-$C_{30}$ aliphatic group, m is an integer in the range from 1 to 8, p is an integer in the range of 0 to 6, and n is an integer in the range of 1 - 8.

## The light coloured oil

The light coloured oil according to the present invention has a colour of D8.0 according to ASTM D1500. Suitable oils include oils originating from crude oil (including synthetic oils such as poly-α-olefins) and oils of natural origin. Suitable examples of oils originating from crude oil are Shell BFE (colour: D8.0), Crossoil L-500 (colour: LI.5), Plaxolene® 50 (colour: 6.5), Nytex 550 (colour: 1.5. Even lighter-coloured oils such as Nynas T4000 (APHA colour is 4100 according to ASTM D5386; compare Shell BFE which has an APHA colour of 135.000) can obviously be used. According to the invention, it is preferred that the light coloured oil has a colour of 6.5 or less according to ASTM D1500, more preferably 2.0 or less.

The light colour oil may have been subjected to a hydrogenation step.

Furthermore, the light coloured oil originating from crude oil has preferably a total content of naphthenics of 35 % - 80 % by weight, based on the total weight of the light coloured oil.

According to an embodiment, the light coloured oil originating from crude oil has a total content of aromatics of less than 30 % by weight, based on the total weight of the light coloured oil, and a total content of aromatics of more than 1 % by weight, based on the total weight of the light coloured oil.

The light coloured oil has a kinematic viscosity (100°C) of 1 - 150 cSt according to ASTM D 445, preferably of 20 - 150 cSt, more preferably of 25 - 140 cSt, yet more preferably of 30 to 130 cSt and most preferably of 40 - 130 cSt. For example, suitable oils according to the invention include Crossoil L-500 (kinematic viscosity (40°C): 98 cSt; (100°C): 8.3 cSt), Plaxolene® 50 (kinematic viscosity (40°C): 3866 cSt; (100°C): 66 cSt), Nytex 550 (kinematic viscosity (40°C): 3800 cSt), Shell BFE (kinematic viscosity (40°C): 60 cSt; (100°C): 3300 cSt).

The light coloured oil has preferably an acid number of less than 0.01 mg KOH/g according to ASTM D 974.

According to another embodiment of the invention, the light coloured oil originating from crude oil comprises polyaromatics and the content thereof is preferably less than 10 % by weight, more preferably less than 5 % by weight, based on the total weight of the light coloured oil. The sulphur content is generally also relatively low. It is preferred that the sulphur content according to ASTM D 323 is below 5 % by weight, more preferably below 2.5 % by weight and most preferably below 1.0 % by weight, based on the total weight of the colourless oil.

As disclosed above, the light coloured oil may be of natural origin (e.g. a vegetable oil). Preferred examples include raw or refined vegetable oils which are obtained from seeds, kernels and/or fruits from oleaginous vegetables. These oils may optionally have been chemically modified. The oils are preferably derived from flax, colza, sunflower, soja, olive, pal, ricin, wood, maize, gourd, grape, jojoba, sesame, nut, hazel, almond, shea, macadamia, cotton, lucerne, rye, cartham, groundnut and copra.

According to the present invention, the oil may be a blend of different oils originating from crude oil, a blend of different natural oils and a blend of one or more oils originating from crude oil and one or more natural oils.

**The clear binder**

According to the present invention, it is preferred that the clear binder has an acid number of less than 1.5 mg KOH/g according to ASTM D 1639.

It is furthermore preferred that the clear binder has an iodine value of less than 40 g 1/100 g according to ASTM D 1959, more preferably of less than 30 g 1/100 g.

According to the invention, the clear binder may be a petroleum hydrocarbon resin, a natural resin or a synthetic hydrocarbon resin. The clear binder may comprise one or more waxes.

According to an embodiment of the invention, a blend of clear binders of different hardness may be employed, e.g. a hard clear binder having a penetration of about 100 $10^{-1}$ mm or less according to ASTM D5-97, preferably about 100 or less to about 10 $10^{-1}$ mm, more preferably of about 60 to about 10 $10^{-1}$ mm, even more preferably about 50 to about 20 $10^{-1}$ mm, and a soft clear binder having a penetration of more than about 100 $10^{-1}$ mm according to ASTM D5-97, preferably more than about 100 or about 350 $10^{-1}$ mm, more preferably of more than about 100 to about 220 $10^{-1}$ mm, even more preferably about 160 to about 220 $10^{-1}$ mm. The blend preferably comprises a weight ratio of a soft clear binder to a hard clear binder in the range of 1 to 30, more preferably in the range of 1 to 10.

If a petroleum hydrocarbon resin is used, it is preferred that the petroleum hydrocarbon resin is selected from the group consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics, or a mixture thereof. Most preferably, the petroleum resin is a C5 - C9 petroleum resin, a C9 - petroleum resin, a C5 - petroleum resin or a mixture thereof.

If a natural resin is used, it is preferred that the natural resin is selected from the group of resins of fossil origin or harvest origin and the resins may have been chemically modified. Suitable examples for resins of harvest origin include accroid resins, dammar resins, rosin resins (e.g. fir, wood and tall oil resins such as tall oil pitch), terpene resins, rosin ester resins, rosin soaps and metal resinates. Suitable examples for resins of fossil origin include copal resins.

If synthetic hydrocarbon resins are used, these resins are different from the elastomers discussed below. Suitable synthetic hydrocarbon resins include polyethylenes and polypropylenes.

**Further components**

The emulsions according to the present application may further comprise an elastomer. The addition of an elastomer has the advantage that life of the road surface coated with the emulsion according to the present invention is enhanced. Elastomers are also beneficial for the flexibility of the coated road surface. The addition of an elastomer further reduces the temperature dependence of visco-elastic properties. Preferably, the elastomer is selected from the group consisting of ethylene-vinyl acetate copolymers, polybutadienes, polyisoprenes, ethylene-propylene copolymers, ethylene-propylenediene copolymers, styrene-ethylene-butadiene-styrene copolymers, styrene-propylene-butadiene-styrene copolymers, butadiene-styrene diblock copolymers, styrene-butadiene-styrene triblock copolymers, isoprene-styrene diblock copolymers, styrene-isoprene-styrene triblock copolymers, wherein the diblock or triblock copolymers may occur in morphological shapes as star-shaped polymers wherein a cross-linking agent such as divinyl benzene is employed in the manufacturing process. However, according to the present invention, it is preferred that the elastomer is a polymer comprising two adjacent, optionally substituted butadiene units such as isoprene, most preferably a polybutadiene, a polyisoprene, a styrene-ethylene-butadiene-styrene copolymer, a styrene-propylene-butadiene-styrene copolymer, a butadiene-styrene diblock copolymer, a styrene-butadiene-styrene triblock terpolymer, a isoprene-styrene diblock copolymer or a styrene-isoprene-styrene triblock terpolymer. More preferably, the elastomer is a polybutadiene, a polyisoprene, a styrene-ethylene-butadiene-styrene copolymer, a styrene-propylene-butadiene-styrene copolymer or a styrene-butadiene-styrene triblock terpolymer. According to another preferred embodiment of the present invention, the elastomer is an ethylene-vinyl acetate copolymer.

**The emulsion**

According to the present invention, the amount of the (1→3)-β-D-glucan in the emulsion is 0.0005 wt.% to 0.1 wt.%, based on the total weight of the emulsion, preferably 0.0005 wt.% to 0.05 wt.%, more preferably 0.0005 wt.% to 0.02 wt.%

The amount of the cationic emulsifier in the emulsion is 0.01 wt.% to 20.0 wt.%, preferably 0.01 wt.% to 10.0 wt.%, more preferably 0.01 wt.% to 5.0 wt.%, even more preferably 0.02 wt.% to 2.5 wt.% even yet more preferably 0.02 wt.% to 0.5 wt.% and in particular 0.02 to 0.2 wt.%, based on the total weight of the emulsion.

Furthermore, the emulsion preferably comprises about 25 to about 75 wt.% of an aqueous phase and about 75 to about 25 wt.% of an oil phase, based on the total weight of the emulsion. More preferably, the emulsion comprises about 30 to about 70 wt.% of an aqueous phase and about 70 to about 30 wt.% of an oil phase, based on the total weight of the emulsion. The oil phase essentially comprises the clear binder and the light coloured oil.

When present in the emulsions according to the present invention, the elastomer content is preferably 0.01 to 10.0 wt. %, more preferably 0.05 to 7.5 wt. %, of the elastomer, based on the total weight of the emulsion.

The emulsions according to the present invention are fast breaking and have excellent storage stabilities. Accordingly, the emulsions according to the present invention are characterized by a breaking index of 150 or less, preferably of 130 or less. A breaking index of 150 or less, preferably 130 or less, ensures in a sufficiently low breaking time of the emulsion when it is applied to a road surface, even under relatively humid and cold conditions which allows the use of such emulsions under less advantageous weather conditions.

In addition, the emulsions according to the present invention are characterized by a C-factor of 200 or less, preferably 150 or less and even more preferably 115 or less. The C-factor is defined herein as:

$$\text{C-factor} = \text{Penetration recovered binder } (10^{-1} \text{ mm}) \times (100 \times \text{Storage stability})^{3,5}$$

wherein the penetration is determined according to ASTM D D5-97 and the storage stability is determined according to NEN-EN 12847. The storage stability is the difference between the water content of the aqueous phase and the oil phase formed after separation. The lower the value of the difference, the better the storage stability. The storage stability is often expressed in a percentage and then this value must be multiplied by 100%.

**End-uses**

The emulsions according to the present applications are in particular useful in road coating applications such as chip less surface dressings and trackless tack coating compositions, water proofing compositions, flooring applications, bonding layers, impregnation layers, dense coated materials and semi-dense coated materials which are cold-cast or storable, slurry seals, micro-surfacing compositions and mortars.

The emulsions can be used in combination with a particulate material, in particular a particulate material having an average diameter of 3 mm or less, more preferably less than 2 mm. The average diameter of the particulate material is therefore preferably 3 mm or less, more preferably less than 2 mm. The average diameter is determined according to British Standard BS 63; a size of 3 mm equals a d/D of 1/4 according to NEN-EN 13043 (cf. Shell Bitumen Handbook, 5th Ed., page 224, Table 11.2, 2003).

According to the present invention, the particulate material can be selected from the group consisting of aggregate material (e.g. chippings), rubber crumbs, fibres of e.g. vegetable origin, wood chips, waste biomass such as Empty Fruit Bunch, and mixtures thereof. The present invention therefore also relates to a composition comprising a particulate material and an emulsion according to the invention. The composition is in particular a waterproofing chip less asphalt top seal composition.

The present invention therefore also relates to a composition comprising (a) a particulate material, wherein the average diameter of the particulate material is 3 mm or less as determined according to British Standard BS 63, and (b) an emulsion according to the invention.

**Examples**

Example 1

A scleroglucan (Actigum® CS 6, Material Safety Data Sheet of 28 February 2007, scleroglucan content about 83 wt.%) purchased from Cargill, France) mixture with a food grade vegetable oil (purchased from Mosselman N.V., Belgium, or Heybroek B.V., the Netherlands) was prepared by mixing the two components at room temperature in a weight ratio of 1 : 2. The food grade vegetable oil is protecting the scleroglucan particles to conglomerate in an aqueous medium and, hence, a homogenous dispersion is obtained when this mixture is added to water whilst stirring. Emulsions were produced according the following procedure. To 99.026 units of weight of water at a temperature of about 60°C, 0.4 units of weight of a 30% hydrochloric acid solution was added whilst gently stirring. After the addition of 0.324 units of weight of Redicote® E9 fatty amine emulsifier (purchased from Akzo Nobel; Redicote® E9 is a special grade of cationic tallowdiamine emulsifier, iodine value 35 - 50 g 1/100 g, total amine number 210 - 225 mg HCl/g) to the water, 0.25 units of weight of the scleroglucan-food grade oil (1 : 2) mixture was added. Both the water and the hard binder, i.e. a binder prepared from a Nytex 550 oil (purchased from Nynas NV, Belgium; Nytex 550 is a hydrotreated heavy naphthenic distillate, CAS No. 64742-52-5) and Nevchem 2774 resin (purchased from Neville Chemical Company, US; a petroleum aromatic hydrocarbon resin) in a 55.9 : 44.1 weight ratio having a penetration of $18 \cdot 10^{-1}$ mm, were fed to an Atomix emulsification unit (Emulbitume, France) and were emulsified to an oil in water (O/W) emulsion having a water content of about 42.5 wt.% water. The storage stability was determined after seven days. The compositions and properties of the emulsions are summarised in Table 1.

Table 1

| Water content (%) | NEN-EN 1428 | 42.5 |
|---|---|---|
| Sieve residue | NEN-EN 1429 | < 0.1 |
| Settling tendency (7 days@ 20 °C) | NEN-EN 12847 | 0.006 |
| pH | NEN-EN 12850 | 2.2 |
| Efflux time (ISO 4 @ 25 is sec) | NEN 3947 | 27 |
| Breaking index (25 °C) | NEN-EN 13075-1 | 122 |
| Needle penetration of the recovered binder (mm/10) | NEN-EN 1426[a] | 18 |
| Volume average particle size ($\mu$m) | see description above | 4.8 |
| Volume fraction of particle > 8 $\mu$m | see description above | 11 |
| C-factor | see description above | 3.01 |
| [a] Equivalent to ASTM D5-97. | | |

After production, the emulsions were packed in 1000 L containers. After 4 days, the emulsion was coloured using 4 wt. % different colour pigment pastes (based on total the total weight of the emulsion), re-packed into 25 kg containers and brought to a location where a test was performed. The emulsion was applied onto a 12 weeks old DAB asphalt layer under the following weather conditions: asphalt temperature was about 27°C, air temperature was about 23°C and relative humidity was about 62%. The emulsion was applied with a rate of 0.5-1 kg/m2 using a roller brush; when the emulsion start breaking, a fine sand material was applied on top (0.3 kg/m$^2$) which provided a relatively coarse surface. After only 30-40 minutes a relatively smooth surface was obtained and the road was opened for traffic.

The emulsions according to this example were also tested as follows. A yellow coloured emulsion was applied to a seven years old DAB ("asphalt surface course") asphalt top layer of a parking lot under the following weather conditions: asphalt temperature was 44°C, air temperature was 38°C and relative humidity of 21%. The rate of application using a roller brush was 0.5 kg/m$^2$. After about 30 minutes a smooth surface was obtained.

The same yellow emulsion was, nine days after production, applied in Alphen a/d Rijn, The Netherlands, on the top layer of a DAB, using a roller brush. The weather conditions were: asphalt temperature was 27°C, air temperature was 23°C and relative humidity of 62%. The product was applied in two layers, each with a rate of 0.4 kg/m$^2$. When the emulsion was not completely broken, the surface was sanded manually using fine sand. After about 30 - 40 minutes after the second application, the road was reopened for traffic.

One month later, the same emulsion was applied in Nieuwkoop, The Netherlands, on the top layer of a DAB, using a roller brush. This time, the product was applied using a Bremag spraying machine; application rate 0.5 kg/m$^2$.

After about half an hour, the road could be reopened for traffic.

Example 2

A scleroglucan (Actigum® CS 6 purchased from Cargill, France; for product details cf. Example 1) mixture with a food grade vegetable oil (purchased from Mosselman N.V., Belgium, or Heybroek B.V., the Netherlands) was prepared by mixing the two components at room temperature in a weight ratio of 1 : 2. The food grade vegetable oil is protecting the scleroglucan particles to conglomerate in an aqueous medium and, hence, a homogenous dispersion is obtained when this mixture is added to water whilst stirring. Emulsions were produced according the following procedure. To 97.79 units of weight of water at a temperature of about 60°C, 0.6 units of weight of a 30% hydrochloric acid solution was added whilst gently stirring. After the addition of 1.5 units of weight of Tego Addibit® F4 HB SZ 10 fatty amine emulsifier (purchased from Degussa, Germany; Degussa is currently known as Evonik AG) to the water, 0.11 units of weight of the scleroglucan-food grade oil (1 : 2) mixture was added. Both the water and the hard binder, i.e. a binder prepared from a Nytex 550 oil (purchased from Nynas NV, Belgium), Nevchem 2774 resin (purchased from Neville Chemical Company, US) and Polybilt 103 thermoplastic elastomer (purchased from Exxon Mobil Chemical, The Netherlands), in a 51.7 : 41.4 : 6.9 weight ratio having a penetration of 26 $10^{-1}$ mm, were fed to an Atomix emulsification unit (Emulbitume, France) and were emulsified to an oil in water (O/W) emulsion having a water content of about 36 wt.% water. The storage stability was determined after seven days. The compositions and properties of the emulsions are summarised in Table 2.

Table 2

| Water content (%) | NEN-EN 1428 | 36 |
|---|---|---|
| Sieve residue | NEN-EN 1429 | < 0.1 |
| Settling tendency (7 days@ 20 °C) | NEN-EN 12847 | 0.008 |
| pH | NEN-EN 12850 | 2.1 |
| Efflux time (ISO 4 @ 25 is sec) | NEN 3947 | 86 |
| Breaking index (25 °C) | NEN-EN 13075-1 | 126 |
| Needle penetration of the recovered binder (mm/10) | NEN-EN 1426[a] | 26 |
| Volume average particle size (μm) | | 3.78 |
| Volume fraction of particle > 8 μm | | 11 |
| C-factor | | 11.9 |
| [a] Equivalent to ASTM D5-97. | | |

After production, the emulsions are packed in 1000 L containers. Four days later, the emulsion was applied onto a 7 years old DAB asphalt layer. The weather conditions were: asphalt temperature was about 32°C, air temperature was about 32°C and relative humidity was about 54%. The emulsion was applied with a rate of 0.5-1 kg/m² using a roller brush, followed after 5-10 minutes by addition of 4 - 8 mm aggregates (1-1.2 kg/m²).

The next day, a second layer of emulsion was applied using an application rate of 1-1.2 kg/m². The weather conditions were: asphalt temperature about 38°C, air temperature about 25 °C and relative humidity about 50%. After 5 minutes, the emulsion was covered with 2-6 mm aggregates.

In another test, the emulsion was applied to a seven years old DAB asphalt top layer, under the following weather conditions: asphalt temperature was 32°C, air temperature was 24°C and relative humidity of 26%. The rate of application using a roller brush was 1 kg/m². The surface was covered with 1 kg/m² fine chippings. The next day (asphalt temperature was 38 °C, air temperature was 25 °C and relative humidity of 50%), a second layer was applied using an application rate of 1-1.2 kg/m². Second layer was manually covered with chippings (1 kg/m² of fine chippings, followed by 1.2 kg/m² of coarse chippings). After about half an hour, the road could be reopened for traffic.

Example 3

A scleroglucan (Actigum® CS 6 purchased from Cargill, France; for product details cf. Example 1) mixture with a food grade vegetable oil (purchased from Mosselman N.V., Belgium, or Heybroek B.V., the Netherlands) was prepared by mixing the two components at room temperature in a weight ratio of 1 : 2. The food grade vegetable oil is protecting the scleroglucan particles to conglomerate in an aqueous medium and, hence, a homogenous dispersion is obtained when this mixture is added to water whilst stirring. Emulsions were produced according the following procedure. To 96.57 units of weight of water at a temperature of about 60°C, 0.47 units of weight of potassium hydroxide (purchased from Brentag BV, The Netherlands) was added whilst gently stirring. After the addition of 2.86 units of weight of Tego Addibit® EK7A quaternary ammonium emulsifier (purchased from Degussa, Germany) to the water, 0.14 units of weight of the scleroglucan- food grade oil (1 : 2) mixture was added. Both the water and the hard binder, i.e. binder prepared from a Nytex 550 oil (purchased from Nynas NV, Belgium), Nevchem 2338 resin (purchased from Neville Chemical Company, US) and Polybilt 106 thermoplastic elastomer (purchased from Exxon Mobil Chemical, The Netherlands), in a 59.6 : 36.5 : 3.9 weight ratio having a penetration of 28 $10^{-1}$ mm, were fed to an Atomix emulsification unit (Emulbitume, France) and were emulsified to an oil in water (O/W) emulsion having a water content of about 41 wt.% water. The storage stability was determined after seven days. The compositions and properties of the emulsions are summarised in Table 3.

Table 3

| Water content (%) | NEN-EN 1428 | 41 |
|---|---|---|
| Sieve residue | NEN-EN 1429 | < 0.1 |
| Settling tendency (7 days@ 20 °C) | NEN-EN 12847 | 0.004 |
| pH | NEN-EN 12850 | 9.1 |
| Efflux time (ISO 4 @ 25 is sec) | NEN 3947 | 46 |
| Needle penetration of the recovered binder (mm/10) | NEN-EN 1426[a] | 28 |
| Volume average particle size ($\mu$m) | | 2.8 |
| Volume fraction of particle > 8 $\mu$m | | 11 |
| C-factor | | 1.13 |
| [a] Equivalent to ASTM D5-97. | | |

Immediately after production, the emulsion was packed in 1000 liter containers. After four days, the emulsion was applied to a seven years old DAB asphalt top layer, under the following weather conditions: asphalt temperature was 38 °C, air temperature was 25 °C and relative humidity of 50%. The rate of application using a roller brush was about 1 kg/m$^2$. The next day (asphalt temperature was 23°C, air temperature was 21°C and relative humidity was 85%) a second layer was applied using a roller brush; application rate was about 1 kg/m$^2$. After about half an hour, the road could be reopened for traffic.

Example 4

The emulsion was prepared according to the procedure described in Example 3, but in this case the components of the binder are added in the weight ratio of 63 : 33 : 4 and the binder has a penetration of 57 $10^{-1}$ mm. The compositions and properties of the emulsions are summarised in Table 4.

Table 4

| Water content (%) | NEN-EN 1428 | 41 |
|---|---|---|
| Sieve residue | NEN-EN 1429 | < 0.1 |
| Settling tendency (7 days@ 20 °C) | NEN-EN 12847 | 0 |
| pH | NEN-EN 12850 | 9.1 |
| Efflux time (ISO 4 @ 25 is sec) | NEN 3947 | 41 |
| Needle penetration of the recovered binder (mm/10) | NEN-EN 1426[a] | 57 |
| Volume average particle size ($\mu$m) | | 2.02 |
| Volume fraction of particle > 8 $\mu$m | | 0 |

(continued)

| | | |
|---|---|---|
| C-factor | | 0 |
| (a) Equivalent to ASTM D5-97. | | |

The emulsion was applied in the same manner as the emulsion illustrated in Example 3.

Example 5

Coloured mortars were prepared using the emulsion described in Example 3. A typical mortar composition is listed in Table 5.

Table 5

| Components | wt. % |
|---|---|
| Demineralized H2O | 3.84 |
| Microsil | 7.39 |
| Proxel | 0.089 |
| Emulsion | 21.27 |
| Latex 47B40 | 2.36 |
| KOH solution (0.15 wt% in water) | 0.89 |
| Synthomer 9523 | 0.65 |
| Pigment paste | 4.43 |
| Silver sand | 29.54 |
| Filter sand 0.2-0.6 mm | 29.54 |

Two days after the production, the mortars described in this Example were pigmented using 4 wt. % different color pigment pastes and were applied using a roller brush (application rate of 2.2-2.6 kg/m$^2$) onto a 7 years old DAB asphalt layer. The weather conditions were: asphalt temperature was about 23°C, air temperature was about 21°C, while the relative humidity was about 85%. After 2 hours, the mortar was already dry, leaving behind a strong surface.
The mortar was also tested in the following manner. The mortar was applied onto a 7 years old DAB asphalt layer under the following weather conditions: asphalt temperature was 40°C, air temperature was 37°C and relative humidity was 28%. The product was applier using a rubber squeegee; the application rate was 5 kg/m$^2$. After 2 hours, a strong surface was obtained.

Example 6

Coloured mortars were prepared using the emulsion described in Example 3. A typical mortar composition is listed in Table 6.

Table 6

| Components | wt % |
|---|---|
| Demineralized H2O | 3.84 |
| Microsil | 7.39 |
| Proxel | 0.089 |
| Emulsion | 18.9 |
| Latex 47B40 | 4.73 |
| KOH solution (0.15 wt% in water) | 0.89 |
| Synthomer 9523 | 0.65 |

(continued)

| Components | wt % |
|---|---|
| Pigment paste | 4.43 |
| Silver sand | 29.54 |
| Filter sand 0.2-0.6 mm | 29.54 |

The mortar was applied onto a 7 years old DAB asphalt layer under the following weather conditions: asphalt temperature was 23°C, air temperature was 21°C and relative humidity was 85%. The product was applier using a rubber squeegee; the application rate was 5 kg/m$^2$. After 2 hours, a strong surface was obtained.

## Claims

1. Emulsion comprising a $(1{\rightarrow}3)$-$\beta$-D-glucan, a cationic emulsifier, a recovered binder having a penetration of less than $70 \cdot 10^{-1}$ mm and more than $10 \cdot 10^{-1}$ mm according to ASTM D5-97, wherein the recovered binder comprises a light coloured oil having a colour of D8.0 according to ASTM D1500 or less and a clear binder, wherein the clear binder is selected from the group consisting of petroleum hydrocarbon resins, natural resins and synthetic hydrocarbon resins,
   wherein the weight ratio of the light coloured oil and the clear binder in the recovered binder is between 20: 80 and 80:20, based on the total weight of the recovered binder, wherein the $(1{\rightarrow}3)$-$\beta$-D-glucan is used in admixture with an oil,
   wherein the $(1{\rightarrow}3)$-$\beta$-D-glucan is scleroglucan,
   wherein the emulsion comprises 0.0005 wt.% to 0.1 wt.% of the scleroglucan and 0.01 wt.% to 20 wt.% of the cationic emulsifier, based on the total weight of the emulsion, and
   wherein the cationic emulsifier is:

   (a) derived from amines having the formula:

   $$R\text{-}NH\text{-}(C_mH_{2m}\text{-}NH)_p\text{-}(C_nH_{2n})\text{-}NH_2$$

   wherein R is a $C_1$-$C_{30}$ aliphatic group, m is an integer in the range from 1 to 8, p is an integer in the range of 0 to 6, and n is an integer in the range of 1 - 8; or
   (b) derived from amidoamines having the formula:

   $$R\text{-}C(O)NH\text{-}(C_mH_{2m}\text{-}NH)_p\text{-}(C_nH_{2n})\text{-}NH_2$$

   wherein R is a $C_1$-$C_{30}$ aliphatic group, m is an integer in the range from 1 to 8, p is an integer in the range of 0 to 6, and n is an integer in the range of 1 - 8.

2. Emulsion according to Claim 1, wherein the emulsion comprises 25 to 75 wt.% of an aqueous phase and 75 to 25 wt.% of an oil phase, based on the total weight of the emulsion.

3. Emulsion according to any one of the preceding claims, wherein the light coloured oil has a total content of naphthenics of 35 % - 80 % by weight, based on the total weight of the light coloured oil.

4. Emulsion according to any one of the preceding claims, wherein the light coloured oil has a kinematic viscosity (100°C) of 1 - 150 cSt according to ASTM D 445.

5. Emulsion according to any one of the preceding claims, wherein the light coloured oil has an acid number of less than 0.01 mg KOH/g according to ASTM D 974.

6. Emulsion according to any one of the preceding claims, wherein the clear binder has an acid number of less than 1.5 mg KOH/g according to ASTM D 1639.

7. Emulsion according to any one of the preceding claims, wherein the clear binder has an iodine value of less than 40 g 1/100 g according to ASTM D 1959.

8. Emulsion according to any one of the preceding claims, wherein the emulsion comprises an elastomer.

9. Emulsion according to any one of the preceding claims, wherein the emulsion has a breaking index of 150 or less as determined according to NEN-EN 13075-1.

10. Emulsion according to any one of the preceding claims, wherein the emulsion has a C-factor of 200 or less, the C-factor being defined as:

$$\text{C-factor} = \text{Penetration recovered binder } (10^{-1}\text{ mm}) \times (100 \times \text{Storage stability})^{3,5}$$

wherein the penetration is determined according to ASTM D D5-97 and the storage stability is determined according to NEN-EN 12847.

11. Use of an emulsion according to any one of claims 1 - 10 in road coating applications.

12. Composition comprising (a) a particulate material, wherein the average diameter of the particulate material is 3 mm or less as determined according to British Standard BS 63, and (b) an emulsion according to any one of Claims 1 - 10.

**Patentansprüche**

1. Emulsion, umfassend ein (1→3)-β-D-Glucan, einen kationischen Emulgator, ein zurückgewonnenes Bindemittel mit einer Eindringtiefe von weniger als $70 \cdot 10^{-1}$ mm und mehr als $10 \cdot 10^{-1}$ mm gemäß ASTM D5-97, wobei das zurückgewonnene Bindemittel ein leicht gefärbtes Öl mit einer Farbe von D8,0 gemäß ASTM D1500 oder weniger und ein klares Bindemittel umfasst, wobei das klare Bindemittel aus der Gruppe ausgewählt ist, die aus Erdölkohlenwasserstoffharzen, natürlichen Harzen und synthetischen Kohlenwasserstoffharzen besteht,
wobei das Gewichtsverhältnis des leicht gefärbten Öls und des klaren Bindemittels in dem zurückgewonnenen Bindemittel zwischen 20:80 und 80:20 liegt, bezogen auf das Gesamtgewicht des zurückgewonnenen Bindemittels,
wobei das (1→3)-β-D-Glucan in Mischung mit einem Öl verwendet wird,
wobei das (1→3)-β-D-Glucan Scleroglucan ist,
wobei die Emulsion 0,0005 Gew.-% bis 0,1 Gew.-% des Scleroglucans und 0,01 Gew.-% bis 20 Gew.-% des kationischen Emulgators, bezogen auf das Gesamtgewicht der Emulsion, umfasst, und
wobei der kationische Emulgator

a) von Aminen mit der Formel

$$R\text{-NH-}(C_mH_{2m}\text{-NH})_p\text{-}(C_nH_{2n})\text{-NH}_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 - 8 ist, oder
b) von Amidoaminen mit der Formel

$$R\text{-C(O)NH-}(C_mH_{2m}\text{-NH})_p\text{-}(C_nH_{2n})\text{-NH}_2$$

wobei R eine aliphatische $C_1$-$C_{30}$-Gruppe ist, m eine ganze Zahl im Bereich von 1 bis 8 ist, p eine ganze Zahl im Bereich von 0 bis 6 ist und n eine ganze Zahl im Bereich von 1 - 8 ist,

abgeleitet ist.

2. Emulsion gemäß Anspruch 1, wobei die Emulsion 25 bis 75 Gew.-% einer wässrigen Phase und 75 bis 25 Gew.-% einer Ölphase, bezogen auf das Gesamtgewicht der Emulsion, umfasst.

3. Emulsion gemäß einem der vorangehenden Ansprüche, wobei das leicht gefärbte Öl einen Gesamtgehalt an Naphthenen von 35 - 80 Gew.-%, bezogen auf das Gesamtgewicht des leicht gefärbten Öls, aufweist.

**4.** Emulsion gemäß einem der vorangehenden Ansprüche, wobei das leicht gefärbte Öl eine kinematische Viskosität (100 °C) von 1 - 150 cSt gemäß ASTM D 445 aufweist.

**5.** Emulsion gemäß einem der vorangehenden Ansprüche, wobei das leicht gefärbte Öl eine Neutralisationszahl von weniger als 0,01 mg KOH/g gemäß ASTM D 974 aufweist.

**6.** Emulsion gemäß einem der vorangehenden Ansprüche, wobei das klare Bindemittel eine Neutralisationszahl von weniger als 1,5 mg KOH/g gemäß ASTM D 1639 aufweist.

**7.** Emulsion gemäß einem der vorangehenden Ansprüche, wobei das klare Bindemittel eine Jodzahl von weniger als 40 g l/100 g nach ASTM D 1959 aufweist.

**8.** Emulsion gemäß einem der vorangehenden Ansprüche, wobei die Emulsion ein Elastomer umfasst.

**9.** Emulsion gemäß einem der vorangehenden Ansprüche, wobei die Emulsion einen Brechungsindex von 150 oder weniger, bestimmt nach NEN EN 13075-1, aufweist.

**10.** Emulsion gemäß einem der vorangehenden Ansprüche, wobei die Emulsion einen C-Faktor von 200 oder weniger aufweist, wobei der C-Faktor definiert ist als:

C-Faktor = Eindringtiefe zurückgewonnenes Bindemittel ($10^{-1}$ mm) x (100 x Lager-stabilität)$^{3,5}$,

wobei die Eindringtiefe gemäß ASTM D D5-97 und die Lagerstabilität gemäß NEN-EN 12847 bestimmt wird.

**11.** Verwendung einer Emulsion gemäß einem der Ansprüche 1 - 10 in Straßenbeschichtungsanwendungen.

**12.** Zusammensetzung, umfassend (a) ein teilchenförmiges Material, wobei der durchschnittliche Durchmesser des teilchenförmigen Materials 3 mm oder weniger beträgt, bestimmt gemäß British Standard BS 63, und (b) eine Emulsion gemäß einem der Ansprüche 1 - 10.

**Revendications**

**1.** Emulsion comprenant un (1→3)-β-D-glucane, un émulsifiant cationique, un liant récupéré ayant une pénétration inférieure à $70 \cdot 10^{-1}$ mm et supérieure à $10 \cdot 10^{-1}$ mm selon ASTM D5-97, dans laquelle le liant récupéré comprend une huile de couleur claire ayant une couleur de D8.0 selon ASTM D1500 ou moins et un liant transparent, dans laquelle le liant transparent est choisi dans le groupe constitué de résines d'hydrocarbures pétroliers, de résines naturelles et des résines d'hydrocarbures synthétiques,
dans laquelle le rapport pondéral de l'huile de couleur claire et du liant transparent dans le liant récupéré est compris entre 20 : 80 et 80 : 20, sur la base du poids total du liant récupéré,
dans laquelle le (1→3)-β-D-glucane est utilisé en mélange avec une huile,
dans laquelle le (1→3)-β-D-glucane est le scléroglucane,
dans laquelle l'émulsion comprend 0,0005 % en poids à 0,1 % en poids de scléroglucane et 0,01 % en poids à 20 % en poids de l'émulsifiant cationique, sur la base du poids total de l'émulsion, et
dans laquelle l'émulsifiant cationique est :

a) dérivé d'amines de formule :

$$R-NH-(C_mH_{2m}-NH)_p-(C_nH_{2n})-NH_2$$

dans laquelle R est un groupe aliphatique en $C_1$-$C_{30}$, m est un entier dans la plage de 1 à 8, p est un entier dans la plage de 0 à 6, et n est un entier dans la plage de 1 à 8 ; ou
(b) dérivé d'amidoamines de formule :

$$R-C(O)NH-(C_mH_{2m}-NH)_p-(C_nH_{2n})-NH_2$$

13

dans laquelle R est un groupe aliphatique en $C_1$-$C_{30}$, m est un entier dans la plage de 1 à 8, p est un entier dans la plage de 0 à 6, et n est un entier dans la plage de 1 à 8.

2. Emulsion selon la revendication 1, dans laquelle l'émulsion comprend de 25 à 75 % en poids d'une phase aqueuse et de 75 à 25 % en poids d'une phase huileuse, sur la base du poids total de l'émulsion.

3. Emulsion selon l'une quelconque des revendications précédentes, dans laquelle l'huile de couleur claire a une teneur totale en naphténiques de 35 % à 80 % en poids, sur la base du poids total de l'huile de couleur claire.

4. Emulsion selon l'une quelconque des revendications précédentes, dans laquelle l'huile de couleur claire a une viscosité cinématique (100°C) de 1 à 150 cSt selon ASTM D 445.

5. Emulsion selon l'une quelconque des revendications précédentes, dans laquelle l'huile de couleur claire a un indice d'acide inférieur à 0,01 mg de KOH/g selon ASTM D 974.

6. Emulsion selon l'une quelconque des revendications précédentes, dans laquelle le liant transparent a un indice d'acide inférieur à 1,5 mg de KOH/g selon ASTM D 1639.

7. Emulsion selon l'une quelconque des revendications précédentes, dans laquelle le liant transparent a un indice d'iode inférieur à 40 g de I/100 g selon ASTM D 1959.

8. Emulsion selon l'une quelconque des revendications précédentes, dans laquelle l'émulsion comprend un élastomère.

9. Emulsion selon l'une quelconque des revendications précédentes, dans laquelle l'émulsion a un indice de rupture de 150 ou moins tel que déterminé selon NEN-EN 13075-1.

10. Emulsion selon l'une quelconque des revendications précédentes, dans laquelle l'émulsion a un facteur C de 200 ou moins, le facteur C étant défini comme :
Facteur C = Liant récupéré par pénétration ($10^{-1}$ mm) x (100 x stabilité au stockage)$^{3,5}$, où la pénétration est déterminée selon ASTM D D5-97 et la stabilité au stockage est déterminée selon NEN-EN 12847.

11. Utilisation d'une émulsion selon l'une quelconque des revendications 1 à 10 dans des applications de revêtement routier.

12. Composition comprenant (a) une matière particulaire, dans laquelle le diamètre moyen de la matière particulaire est de 3 mm ou moins tel que déterminé selon la norme britannique BS 63, et (b) une émulsion selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002206047 A, Showa Shell
- WO 2009010582 A, Shell
- US 2007105987 A, Latexfalt B.V.
- US 5246986 A, Elf France
- GB 2452903 A
- WO 8906259 A
- WO 2009113854 A, Latexfalt B.V.

### Non-patent literature cited in the description

- Sulfur/Asfalt binders for Road Construction. **C. GARRIGUES ; P. VINCENT.** New uses of Sulfur. 1975, 130-153
- *Advances in Chemistry,* vol. 140, ISBN 13: 9780841202184
- Terminology, and Symbols in Colloid and Surface Chemistry. International Union of Pure and Applied Chemistry, Manual of Symbols and Terminology for Physiochemical Quantities and Units, Appendix II, Definitions. 2001
- *CHEMICAL ABSTRACTS,* 39464-87-4
- Shell Bitumen Handbook. 2003, 224
- *CHEMICAL ABSTRACTS,* 64742-52-5